# EUROPÄISCHE PATENTSCHRIFT

(11) **EP 4 037 178 B1**
(45) Veröffentlichungstag und Bekanntmachung des Hinweises auf die Patenterteilung: **13.09.2023**
(21) Anmeldenummer: 22151699.0
(22) Anmeldetag: 17.01.2022
(51) Int. Cl.: H02P 6/182, H02P 27/08

(54) **VERFAHREN ZUM ANSTEUERN EINES MINDESTENS ZWEIPHASIGEN BÜRSTENLOSEN MOTORS**
METHOD FOR DRIVING AN AT LEAST TWO-PHASE BRUSHLESS MOTOR
PROCÉDÉ DE COMMANDE D'UN MOTEUR SANS BALAI AU MOINS BIPHASÉ

(30) Priorität: 28.01.2021 BE 202105066
(43) Veröffentlichungstag der Anmeldung: 03.08.2022
(73) Patentinhaber: Miele & Cie. KG, 33332 Gütersloh (DE)
(72) Erfinder: Sammoud, Hafedh, 8090 Kelibia (TN)

(56) Entgegenhaltungen:
- DE-A1- 19 860 446
- DE-A1-102016 222 015
- DE-A1-102017 117 109

## Beschreibung

Die Erfindung betrifft ein Verfahren zum Ansteuern eines mindestens zweiphasigen bürstenlosen Motors gemäß dem Patentanspruch 1 und eine Ansteuerungsvorrichtung zum Ansteuern eines mindestens zweiphasigen bürstenlosen Motors gemäß dem Patentanspruch 8.

Zu den elektrischen Antrieben gehören die Synchronmotoren als Einphasen- oder Drehstrom-Synchronmaschinen im Motorbetrieb. Der Rotor bzw. der Läufer weist eine konstante Magnetisierung auf, welche im Betrieb synchron von einem bewegten magnetischen Drehfeld im Stator mitgenommen wird, woraus sich die Dreh- bzw. Rotationsbewegung des Rotors innerhalb des Stators bzw. Ständers ergibt. Mit anderen Worten wird die, üblicherweise dreisträngige, Drehstromwicklung des Stators durch eine geeignete Schaltung derart angesteuert, dass seitens der Spulen des Stators ein wanderndes magnetisches Feld erzeugt wird, welches den Rotor mitzieht und hierdurch in Rotation versetzt. Die Dreh- bzw. Rotationsbewegung des Rotors des laufenden Synchronmotors ist dabei synchron zur Wechselspannung der Wicklungen des Stators. Die Drehzahl der Drehbewegung des Rotors ist über die Polpaarzahl der Wicklungen des Stators mit der Frequenz der Wechselspannung verknüpft. Zum anderen kann das magnetische Feld des Rotors durch Permanentmagnete erzeugt werden, was als Selbsterregung bezeichnet wird. In diesem Fall kann auf die elektrische Kontaktierung zwischen Stator und Rotor verzichtet werden. Dies kann die zuvor genannten Nachteile vermeiden sowie insgesamt das Gewicht, den Bauraum und die Kosten derartiger permanenterregter Synchronmotoren geringhalten. Derartige permanenterregte Synchronmotoren mit einer schaltenden Elektronik werden daher üblicherweise auch als bürstenlose Motoren (Englisch: brushless direct current motor - kurz: BLDC-Motor) bezeichnet. Die Spulenstränge des Stators können über einen Vierquadrantensteller angesteuert werden. Die Elektronik zur Ansteuerung der Brücke ist ein geregelter Frequenzumrichter. Üblicherweise werden bürstenlose Motoren dreiphasig ausgebildet, da sie dann den Vorteil einer definierten Läuferstellung bei hoher Dynamik, hohem Drehmoment und hoher Effizienz aufweisen. Charakteristisch für bürstenlose Motoren ist ihre Kommutierung, welche zum Beispiel bei einem dreiphasigen Stator aus sechs Blöcken bzw. Sektoren pro Drehfelddurchlauf, d.h. pro Motorumdrehung, besteht, welche sich jeweils vom Schaltzustand der Brückenschaltung unterscheiden. Dabei sind immer lediglich zwei Gegentaktstufen der Brücke aktiv und die dritte Gegentaktstufe befindet sich im Zustand "floating". Die Spannung an diesem Brückenpunkt wird durch das Schaltungsnetz gemäß dem Stern-Ersatzschaltbild definiert. Die Brückensteuerung sorgt dafür, dass immer die Motorphase "floating" ist, welche - bei trapezoider Gegenspannung - gerade die Polarität wechselt.

Da die Brückensteuerung automatisch weiterschaltet, befindet sich das Statorfeld immer in dem Block mit der optimalen Magnetflussänderung, d.h. mit der maximalen Generatorspannung. Der bürstenlose Motor dreht somit hoch, bis seine Generatorspannung der Versorgungsspannung entspricht. Dann ist die maximale Drehzahl bzw. die Betriebsdrehzahl erreicht und wird konstant gehalten. Eine Steuerung bzw. Änderung der Drehzahl des Rotors kann somit über die Änderung der Versorgungsspannung erfolgen.

Die Steuerung der Kommutierung erfolgt in Abhängigkeit der aktuellen Rotorposition, welche über wenigstens einen Positionssensor zum Beispiel als Hall-Sensor erfasst werden kann, was jedoch zu einem entsprechenden zusätzlichen Aufwand bzw. zu entsprechenden Kosten führt sowie Bauraum erfordert.

Alternativ kann daher eine sensorlose Kommutierung umgesetzt und auf Positionssensoren verzichtet werden, indem die aktuelle Rotorposition indirekt durch die Messung von elektrischen Parametern an den Spulen gewonnen wird. Hierzu kann beispielsweise die in den Spulen des Stators ausgelöste EMK (elektromotorische Kraft) erfasst und von der elektronischen Steuerschaltung ausgewertet werden, was jedoch erst ab einer gewissen Mindestdrehzahl erfolgen kann.

Mit anderen Worten ist ein bürstenloser Motor (BLDC-Motor) konstruktiv gesehen eine Drehfeldmaschine, welche keinen mechanischen Kommutator benötigt. Der Rotor beinhaltet einen oder mehrere Permanentmagnete. Durch die Wechselwirkung zwischen Statorfeld und Rotorfeld entsteht ein elektrisches Moment, das zu einer Rotation führen kann.

Zum Betrieb eines bürstenlosen Motors ist üblicherweise ein Motorumrichter notwendig. Der Motorumrichter beinhaltet üblicherweise im Wesentlichen ein Controller sowie Leistungshalbleiter zur Ansteuerung der Motorphasen. Außerdem ist üblicherweise ein Zwischenkreis vorhanden, aus dem der bürstenlose Motor gespeist wird.

Anders als die unter dem Begriff permanenterregte Synchron-Maschinen (PMSM) oder PMAC bekannten Motoren werden bei einem bürstenlosen Motor z.B. jeweils nur zwei Phasen von drei gleichzeitig bestromt und die dritte Phase ist stromlos. Die Auswahl der zu bestromenden Phasen ist von der Rotorlage abhängig. Der Übergang von einem Sektor bzw. Block zum nächsten wird auch "elektronische Kommutierung" genannt; deswegen auch die Bezeichnung "brushless" oder "elektronisch kommutiert". Die für die Kommutierung eines bürstenlosen Motors notwendige Information über die Rotorlage wird üblicherweise über einen Lagesensor wie beispielsweise Hall-Sensoren, Resolver oder Inkrementalgeber gemessen.

Aus dem Stand der Technik sind verschiedene Lösungen bekannt, die diese Kommutierung ohne einen Lagesensor erlauben. Der am meisten verbreitete Ansatz der sensorlosen Ansteuerung basiert darauf, die Rotorlage und die Kommutierungszeitpunkte durch Messung der induzierten Spannung in der inaktiven Phase zu ermitteln. Die Spannungspotenziale der Motorphase und des Motorsternpunkts werden über Spannungsteiler miteinander verglichen und der Nullübergang wird als Referenzzeitpunkt für die Kommutierung genommen.

Bei bürstenlosen Motoren, bei denen der Sternpunkt nicht physikalisch herausgeführt ist (etwa bei einer Dreieck-Schaltung), kann ein Sternpunkt künstlich durch drei in Stern geschaltete Widerstände nachgebildet werden. Das Spannungspotential des künstlichen Sternpunkts wird dann anschließend mit dem Spannungspotential der inaktiven Phase, zum Beispiel über einen Komparator, verglichen. Der Nulldurchgang dieser Differenz wird als Referenzzeitpunkt für die Kommutierung genommen.

Die Leistung eines bürstenlosen Motors wird, vereinfacht dargestellt, durch die Einschaltzeit der Halbleiter der Brücke bestimmt. Es wird für jede der Phasen eine Sollspannung berechnet. Diese Sollspannung wird durch die Höhe der Zwischenkreisspannung dividiert und somit die Einschaltzeit der Halbleiter berechnet. Ist die Sollspannung gleich der Zwischenkreisspannung, befindet sich der geregelte Frequenzumrichter in Vollaussteuerung, d.h. die Einschaltzeit beträgt 100% und die Leistung des bürstenlosen Motors kann nicht weiter erhöht werden. Somit ist die Leistung eines bürstenlosen Motors durch die Höhe der Zwischenkreisspannung begrenzt.

Dies ist insbesondere bei akkubetriebenen Geräten relevant, da die Zwischenkreisspannung mit sinkender Akkuspannung ebenfalls sinkt und somit im unteren Spannungsbereich des Ackus wohlmöglich die volle Leistung des bürstenlosen Motors nicht mehr erreicht werden kann.

Bei einem optimal kommutierten bürstenlosen Motor sollen der Phasenstrom und die elektromotorische Kraft (EMK) in Phase sein, damit ein maximales Verhältnis der Leistung zum Stromeffektivwert erreicht wird. Dieses Kriterium bedeutet, dass der Nulldurchgang der EMK einer Phase etwa in der Mitte des stromlosen Intervalls erfolgen soll (unter der Annahme einer kleinen Verzögerung zwischen Spannung und Strom in der Phase). Bei der herkömmlichen Ansteuerung ist dies nicht ohne weiteres gegeben.

Die DE 10 2016 222015 A1 beschreibt ein Verfahren zum Betreiben eines bürstenlosen und sensorlosen mehrphasigen Elektromotors in einem Kraftfahrzeug, bei welchem in Abhängigkeit eines Anfangswertes der Rotorposition eine Motorphase mit einem PWM-Signal versorgt wird, wobei die verbleibende Anzahl von Motorphasen mit einem Bezugspotential eines Zwischenkreises verbunden werden.

Die DE 198 60 446 A1 beschreibt ein Verfahren zur Regelung eines spannungs-/ frequenzumrichtergesteuerten Mehrphasen-Permanentmagnetmotors, das Verfahren ermittelt die Phasenverschiebung zwischen EMF und BEMF anhand der Abweichung zwischen dem Nulldurchgang des Phasenstromes und dem der durch Eigeninduktion erzeugten Spannung und regelt die Frequenz des Umrichters entsprechend nach. Die Messung der Eigeninduktion erfolgt im Nulldurchgang des Stromverlaufes der zugehörigen Phase, wobei während der Messung die Phase vom Versorgungsnetz getrennt wird.

Die DE 10 2017 117 109 A1 beschreibt ein Verfahren zur Ansteuerung eines mindestens dreiphasigen bürstenlosen Motors, bevorzugt ohne Rotorlagesensor, umfassend:
- Bestromen von zwei Phasen, wobei die Spannung des Bestromens mittels PWM-Steuerung eingestellt wird;
- Ermitteln der induzierten Spannung einer nicht bestromten Phase;
- Anpassen der PWM-Frequenz, falls die induzierte Spannung ungleich Null ist, wobei
   o die PWM-Frequenz erhöht wird, falls die induzierte Spannung bei positivem Nulldurchgang < 0; oder die induzierte Spannung bei negativem Nulldurchgang > 0; und
   o die PWM-Frequenz verringert wird, falls die induzierte Spannung bei positivem Nulldurchgang > 0; oder die induzierte Spannung bei negativem Nulldurchgang < 0.

Somit wird die induzierte Spannung verwendet, um auf den Zustand der Kommutierung zu schließen. Abhängig davon kann über die Änderung der PWM-Frequenz entsprechend geregelt werden, um den Nulldurchgang der induzierten Spannung bzw. der elektromotorischen Kraft mit der Mitte des stromlosen Intervalls zu synchronisieren. Damit werden Phasenstrom und EMK in Phase gehalten und das Verhältnis der Leistung zum Stromeffektivwert wird maximiert.

Mit anderen Worten wird bei dem sensorlosen Regelungsverfahren der DE 10 2017 117 109 A1 der Kommutierungszeitpunkt bzw. die Ermittlung der Rotorposition durch Messung einer Phasenspannung in der unbestromten Phase und der Sternpunktspannung ermittelt und aus der Differenz dieser beiden Spannungen wird die induzierte Spannung berechnet. Im normalen Betrieb sollte die induzierte Spannung gleich Null sein, d.h. die Kommutierung erfolgt synchron zum Nulldurchgang der induzierten Spannung. Die Phasenregelschleife (PLL) der DE 10 2017 117 109 A1 synchronisiert die PWM-Frequenz mit der Motordrehzahl anhand der Spannungsdifferenz als induzierte Spannung und regelt somit die Spannungsdifferenz zum Abtastzeitpunkt auf Null.

Nachteilig ist hierbei jedoch, dass der beste Wirkungsgrad eines bürstenlosen Motors dann erreicht wird, wenn die induzierte Spannung, d.h. die elektromotorische Kraft (EMK) genannt, und der Phasenstrom in Phase liegen. Da der Strom in der Motorphase, d.h. der Phasenstrom, jedoch aufgrund der Induktivität der induzierten Spannung nacheilt, befindet man sich jedoch nicht im optimalen Arbeitsbereich.

Der Erfindung stellt sich das Problem, ein Verfahren zum Ansteuern eines mindestens zweiphasigen bürstenlosen Motors der eingangs beschriebenen Art bereitzustellen, so dass die Leistungsgrenze des mindestens zweiphasigen bürstenlosen Motors erhöht werden kann. Alternativ sollen auf diese Art und Weise die Drehzahl oder der Motorstrom geregelt werden können. Dies soll insbesondere möglichst einfach, kostengünstig und bzw. oder flexibel umgesetzt werden können. Zumindest soll eine Alternative zu bekannten derartigen Verfahren geschaffen werden.

Erfindungsgemäß wird dieses Problem durch ein Verfahren mit den Merkmalen des Patentanspruchs 1 und durch eine Ansteuerungsvorrichtung mit den Merkmalen des Patentanspruchs 8 gelöst. Vorteilhafte Ausgestaltungen und Weiterbildungen der Erfindung ergeben sich aus den nachfolgenden Unteransprüchen.

Somit betrifft die Erfindung ein Verfahren zum Ansteuern eines mindestens zweiphasigen bürstenlosen Motors, vorzugsweise ohne Rotorlagesensor, mit wenigstens den Schritten:
- Bestimmen einer Soll-Phasenspannung basierend auf einem von
   o einer vorbestimmten Soll-Leistung und einer Ist-Leistung,
   o einer vorbestimmten Soll-Drehzahl und einer Ist-Drehzahl,
   o einem Soll-Strom und einem Ist-Strom sein,
- Bestromen der zwei Phasen mit einer Phasenspannung basierend auf der Soll-Phasenspannung und einer erfassten Ist-Phasenspannung, wobei die Phasenspannung des Bestromens mittels PWM-Steuerung eingestellt wird,
- Vergleichen der bestimmten Soll-Phasenspannung mit einer erfassten Zwischenkreisspannung,
- in Reaktion auf das Vergleichen im Falle, dass die bestimmte Soll-Phasenspannung der erfassten Zwischenkreisspannung abzüglich eines optionalen Offsets entspricht:
   o Ermitteln einer induzierten Spannung einer nicht-bestromten Phase,
   o Bestimmen eines Sollwerts der induzierten Spannung basierend auf der vorbestimmten Soll-Leistung und der Ist-Leistung,
   o Vergleichen der ermittelten induzierten Spannung mit dem bestimmten Sollwert der induzierten Spannung und
   o Anpassen der PWM-Frequenz, falls die Differenz zwischen der ermittelten induzierten Spannung und dem bestimmten Sollwert der induzierten Spannung ungleich Null ist.

Der Erfindung liegt dabei die Erkenntnis zugrunde, dass bei bekannten bürstenlosen Motoren, wie beispielsweise in der DE 10 2017 117 109 A1 beschrieben, die Leistung durch die Zwischenkreisspannung begrenzt wird. Wird der bürstenlose Motor mit einer Soll-Phasenspannung betrieben, welche der Zwischenkreisspannung entspricht, so ist seine maximale Ist-Leistung erreicht. Dies wird als Vollaussteuerung bezeichnet. Wird eine noch höhere Leistung gefordert, d.h. liegt die Soll-Leistung über der Ist-Leistung bei Vollaussteuerung, so kann diese Soll-Leistung nicht dadurch erreicht werden, dass die Phasenspannung weiterhin auf die Soll-Phasenspannung geregelt wird, da die Phasenspannung bereits ihr Maximum erreicht hat.

Optional kann hier der Grenzwert auch (durch Verwendung eines negativen Offsets in Bezug auf die Zwischenkreisspannung) unterhalb der Zwischenkreisspannung gewählt werden, um z.B. noch Regelreserve zu haben.

Erfindungsgemäß wird daher der zuvor beschriebene Zustand, dass Vollaussteuerung vorliegt, erkannt und in Reaktion hierauf der Kommutierungswinkel verändert und insbesondere vorgezogen, um auf diese Art und Weise trotz Vollaussteuerung die Ist-Leistung zu erhöhen und hierdurch der Soll-Leistung anzugleichen bzw. diese zu erreichen.

Dies ist dadurch begründet, dass die Phasenregelschleife des geregelten Frequenzumrichters bekannter bürstenloser Motoren, wie beispielsweise in der DE 10 2017 117 109 A1 beschrieben, die PWM-Frequenz anhand der Spannungsdifferenz als induzierte Spannung mit der Motordrehzahl synchronisiert und somit die Spannungsdifferenz zum Abtastzeitpunkt auf Null regelt.

Wird nun erfindungsgemäß der Kommutierungswinkel verändert und insbesondere vorgezogen, indem die Spannungsdifferenz als induzierte Spannung nicht auf Null, wie bisher bekannt, sondern auf einen von Null abweichenden vorbestimmten Sollwert der induzierten Spannung geregelt wird, so kann die Ist-Leistung auf diese Art und Weise bei Vollaussteuerung weiter erhöht werden. Hierdurch synchronisiert die Phasenregelschleife des geregelten Frequenzumrichters die Motordrehzahl mit dem vorbestimmten Sollwert der induzierten Spannung, wodurch die PWM-Frequenz und damit auch die Ist-Leistung des Motors verändert werden. Hierdurch kann der Spielraum zum Betreiben eines mindestens zweiphasigen bürstenlosen Motors auf einfache Art und Weise, insbesondere bei Vollaussteuerung, erhöht bzw. erweitert werden.

Insbesondere kann durch einen vorbestimmten Sollwert der induzierten Spannung, welcher kleiner als Null ist, der Kommutierungswinkel vorgezogen und hierdurch die Leistung des zweiphasigen bürstenlosen Motors erhöht werden. Somit kann auch bei geringer Zwischenkreisspannung, zum Beispiel bei einem akkubetriebenen zweiphasigen bürstenlosen Motor, die volle Motorleistung erzielt werden. Zusätzlich oder alternativ kann der geregelte Frequenzumrichter kleiner in der Leistung ausgelegt werden, wodurch Kosten und bzw. oder erforderlicher Bauraum und bzw. oder der elektrische Energiebedarf reduziert werden kann bzw. können. Zusätzlich oder alternativ kann der Wirkungsgrad des zweiphasigen bürstenlosen Motors erhöht werden.

Dabei ist es auch möglich, mittels des erfindungsgemäßen Verfahrens die Drehzahl oder den Strom des zweiphasigen bürstenlosen Motors anstelle von dessen Leistung zu regeln.

Gemäß einem Aspekt der Erfindung erfolgt die Reaktion auf das Vergleichen der bestimmten Soll-Phasenspannung mit einer erfassten Zwischenkreisspannung vorbestimmt zeitlich verzögert. Dies kann beispielsweise dadurch erfolgen, dass bei Erreichen eines vorbestimmten Grenzwertes der Differenz zwischen der bestimmten Soll-Phasenspannung und der erfassten Zwischenkreisspannung ein Zähler inkrementiert wird. Wird dann ein weiterer Grenzwert des Zählers erreicht, kann die Reaktion erfolgen. Wird der weitere Grenzwert des Zählers nicht bzw. nicht innerhalb eines vorbestimmten Zeitraums erreicht, weil der vorbestimmte Grenzwert der Differenz zwischen der bestimmten Soll-Phasenspannung und der erfassten Zwischenkreisspannung nicht ausreichend häufig erreicht bzw. wieder unterschritten wird, so kann die Reaktion unterbleiben. Dies kann dafür sorgen, dass die Reaktion nur dann erfolgt, falls der vorbestimmte Grenzwert der Differenz zwischen der bestimmten Soll-Phasenspannung und der erfassten Zwischenkreisspannung in einem ausreichenden Maße erreicht wird, um das Auslösen der Reaktion zu rechtfertigen.

Insbesondere kann verhindert werden, dass Messschwankungen zum Auslösen der Reaktion führen können. Dies kann die Stabilität und die Verlässlichkeit des erfindungsgemäßen Verfahrens erhöhen.

Gemäß einem weiteren Aspekt der Erfindung erfolgt das Bestromen der zwei Phasen mit der Phasenspannung wieder basierend auf der Soll-Phasenspannung und der erfassten Ist-Phasenspannung, falls das Vergleichen der ermittelten induzierten Spannung mit dem bestimmten Sollwert der induzierten Spannung eine Differenz von Null ergibt. Mit anderen Worten kann wieder zu der bekannten Leistungsregelung zurückgekehrt werden, falls die Vollaussteuerung gerade erreicht oder wieder unterschritten wird und die Soll-Leistung wie bisher bekannt erreicht werden kann. Dies kann die Leistungsregelung vereinfachen.

Gemäß einem weiteren Aspekt der Erfindung erfolgt das erneute Bestromen der zwei Phasen mit der Phasenspannung vorbestimmt zeitlich verzögert. Dies kann wie zuvor hinsichtlich des Vergleichens der bestimmten Soll-Phasenspannung mit einer erfassten Zwischenkreisspannung erfolgen und zu den dort beschriebenen Eigenschaften und Vorteilen führen.

Gemäß einem Aspekt der Erfindung ist der vorbestimmte Sollwert der induzierten Spannung kleiner als Null. Auf diese Art und Weise kann der Kommutierungswinkel vorgezogen und hierdurch die Leistung des zweiphasigen bürstenlosen Motors erhöht werden, wie bereits zuvor beschrieben.

Gemäß einem weiteren Aspekt der Erfindung ist der vorbestimmte Sollwert der induzierten Spannung größer als Null. Auf diese Art und Weise kann der Kommutierungswinkel verzögert und hierdurch die Leistung des zweiphasigen bürstenlosen Motors reduziert werden, was den Spielraum zum Betreiben des zweiphasigen bürstenlosen Motors erhöhen bzw. erweitern kann.

Gemäß einem weiteren Aspekt der Erfindung erfolgt das Ermitteln der induzierten Spannung einer nicht-bestromten Phase durch die Schritte:
- Ermitteln der Phasenspannung der nicht-bestromten Phase,
- Ermitteln der Sternpunktspannung, und
- Bilden der Differenz zwischen der ermittelten Phasenspannung und der ermittelten Sternpunktspannung als induzierte Spannung.

Auf diese Art und Weise kann das Ermitteln der induzierten Spannung einer nicht-bestromten Phase umgesetzt werden.

Die vorliegende Erfindung betrifft auch eine Ansteuerungsvorrichtung zum Ansteuern eines mindestens zweiphasigen bürstenlosen Motors, vorzugsweise ohne Rotorlagesensor, vorzugsweise gemäß einem Verfahren nach einem der vorangehenden Ansprüche,
mit einer Steuerungseinheit, welche ausgebildet ist,
   - eine Soll-Phasenspannung zu bestimmen basierend auf einem von
      o einer vorbestimmten Soll-Leistung und einer Ist-Leistung,
      ∘ einer vorbestimmten Soll-Drehzahl und einer Ist-Drehzahl,
      ∘ einem Soll-Strom und einem Ist-Strom sein,
   - zwei Phasen mit einer Phasenspannung basierend auf der Soll-Phasenspannung und einer erfassten Ist-Phasenspannung zu bestromen, wobei die Phasenspannung des Bestromens mittels PWM-Steuerung eingestellt wird, und
   - die bestimmte Soll-Phasenspannung mit einer erfassten Zwischenkreisspannung zu vergleichen, und
mit einer Abtasteinrichtung, welche ausgebildet ist, die induzierte Spannung einer nicht-bestromten Phase zu ermitteln,
wobei die Steuerungseinheit ferner ausgebildet ist, in Reaktion auf das Vergleichen im Falle, dass die bestimmte Soll-Phasenspannung der erfassten Zwischenkreisspannung abzüglich eines optionalen Offsets entspricht:
   - einen Sollwert der induzierten Spannung basierend auf der vorbestimmten Soll-Leistung und der Ist-Leistung zu bestimmen,
   - die ermittelte induzierte Spannung mit dem bestimmten Sollwert der induzierten Spannung zu vergleichen und
   - die PWM-Frequenz anzupassen, falls die Differenz zwischen der ermittelten induzierten Spannung und dem bestimmten Sollwert der induzierten Spannung ungleich Null ist.

Hierdurch kann eine Ansteuerungsvorrichtung bereitgestellt werden, um die zuvor beschriebenen Aspekte der Erfindung bzw. um das erfindungsgemäße zuvor beschriebene Verfahren bei einem mindestens zweiphasigen bürstenlosen Motor umzusetzen.

Gemäß einem Aspekt der Erfindung ist die Abtasteinrichtung ferner ausgebildet, die Phasenspannung der nicht-bestromten Phase zu ermitteln, die Sternpunktspannung zu ermitteln und die Differenz zwischen der ermittelten Phasenspannung und der ermittelten Sternpunktspannung als induzierte Spannung zu bilden. Auf diese Art und Weise kann das Ermitteln der induzierten Spannung einer nicht-bestromten Phase umgesetzt werden.

Die vorliegende Erfindung betrifft auch einen mindestens zweiphasigen bürstenlosen Motor, vorzugsweise ohne Rotorlagesensor, mit einer Ansteuerungsvorrichtung wie zuvor beschrieben. Hierdurch kann ein mindestens zweiphasiger bürstenloser Motor bereitgestellt werden, um die zuvor beschriebenen Aspekte der Erfindung bzw. um das erfindungsgemäße zuvor beschriebene Verfahren umzusetzen.

Die vorliegende Erfindung betrifft auch ein Haushaltsgerät mit mindestens einem mindestens zweiphasigen bürstenlosen Motor wie zuvor beschrieben. Hierdurch kann ein Haushaltsgerät bereitgestellt werden, um die zuvor beschriebenen Aspekte der Erfindung bzw. um das erfindungsgemäße zuvor beschriebene Verfahren umzusetzen.

Gemäß einem Aspekt der Erfindung weist das Haushaltsgerät einen, vorzugsweise wiederaufladbaren, elektrischen Energiespeicher auf und ist ausgebildet, mittels der gespeicherten elektrischen Energie des elektrischen Energiespeichers betrieben zu werden.

Diesem Aspekt der Erfindung liegt die Erkenntnis zugrunde, dass bei akkubetriebenen Haushaltsgeräten die Zwischenkreisspannung mit sinkender Akkuspannung ebenfalls sinkt und somit im unteren Spannungsbereich des Akkus wohlmöglich die volle Leistung des bürstenlosen Motors nicht mehr erreicht werden kann. Gerade in einer derartigen Situation die Leistung des bürstenlosen Motors erfindungsgemäß wieder zu erhöhen kann es dem Benutzer ermöglichen, das Haushaltsgerät auch bei sinkender Akkuspannung mit ausreichender Leistung zu betreiben, um das Haushaltsgerät bestimmungsgemäß verwenden zu können.

Ein Ausführungsbeispiel der Erfindung ist in den Zeichnungen rein schematisch dargestellt und wird nachfolgend näher beschrieben. Es zeigt
- Figur 1: Schaltung eines bekannten bürstenlosen Motors;
- Figur 2: Verläufe der Phasenspannungen der drei Phasen des bürstenlosen Motors der Figur 1;
- Figur 3: ein Blockschaltbild einer Leistungsregelung mit Soll-Phasenspannung als Reglerausgangsgröße;
- Figur 4: ein Blockschaltbild einer Leistungsregelung mit Sollwert der induzierten Spannung als Reglerausgangsgröße; und

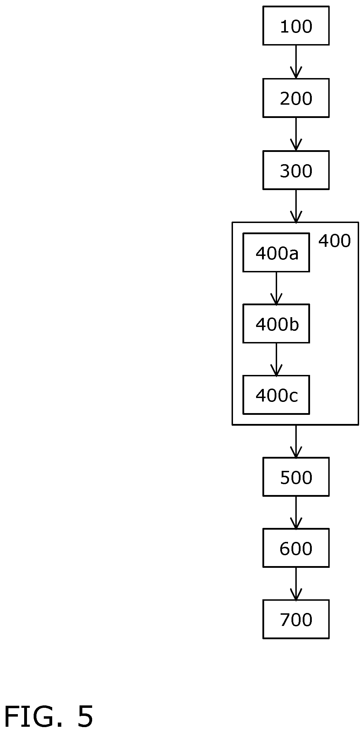

- Figur 5: ein Ablaufdiagramm eines erfindungsgemäßen Verfahrens.

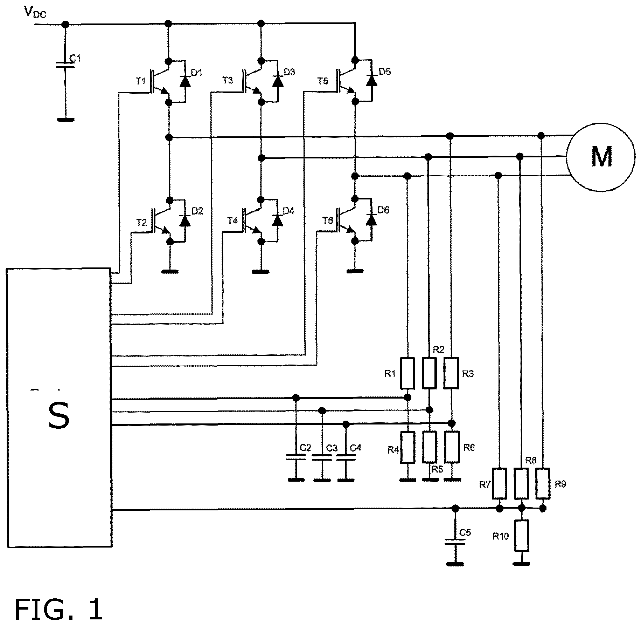

Figur 1 zeigt eine Schaltung eines bekannten bürstenlosen Motors M. Der bürstenlose Motor M, kurz BLDC-Motor M, wird über eine Steuerungseinheit S in Form eines geregelten Frequenzumrichters S angesteuert bzw. betrieben. Aus einer Gleichspannung V_{DC} als Zwischenkreisspannung V_{DC} wird über eine B6-Brücke mit sechs Schaltelementen (MOSFETs oder Transistoren) T1-T6 und sechs Dioden D1-D6 ein zweiphasiges Drehfeld an den BLDC-Motor M gelegt. Hierdurch wird eine Rotation eines Rotors (nicht dargestellt) des BLDC-Motors M im Betrieb bewirkt.

Damit das Drehfeld, welches auf den Stator (nicht dargestellt) des BLDC-Motors M gegeben wird, passend zur Rotorlage ist, muss die Rotorlage bestimmt werden. In der Vergangenheit wurde dies über einen Sensor am BLDC-Motor M getan. Mit dem Aufkommen der sensorlosen Regelung wurde der Sensor durch die Messung elektrischer Größen in Kombination mit einem Software-Motormodell seitens der Steuerungseinheit S ersetzt. Zu diesem Zweck wurden die Phasenspannungen U_{Phase} der drei Phasen U, V, W und auch die Sternpunktspannung gemessen. Die Sternpunktspannung kann entweder am Sternpunkt des BLDC-Motors M gemessen oder über einen "künstlichen Sternpunkt" nachgestellt und gemessen werden. Die Schaltung der ohmschen Widerstände R8-R10 und des Kondensators C5 stellt den künstlichen Sternpunkt dar. Bei einem BLDC-Motor M mit Dreieckschaltung wird üblicherweise nur mit dem künstlichen Sternpunkt gearbeitet.

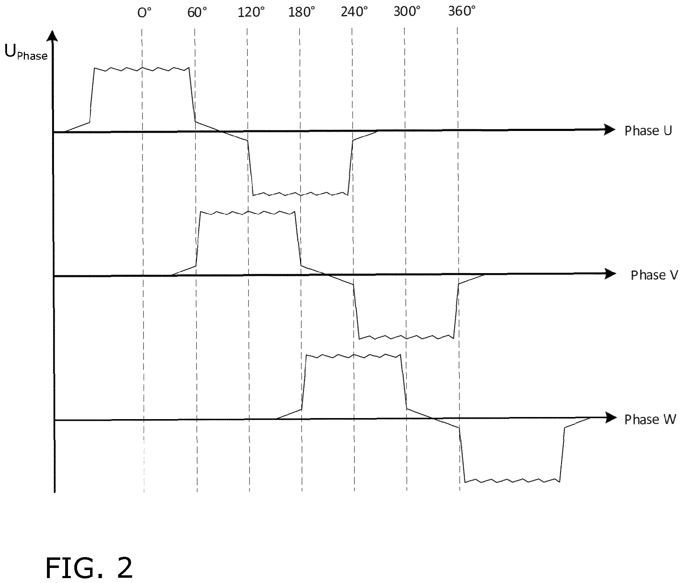

Figur 2 zeigt die Verläufe der Phasenspannungen U_{Phase} der drei Phasen U, V, W des bürstenlosen Motors M der Figur 1. Wie dem zeitlichen Verlauf der Phasenspannung U_{Phase} der Phase U zu entnehmen ist, so wird die Phase U 120° (zwei Sektoren) lang mit einer positiven Spannung aktiv beaufschlagt. Einen Sektor lang ist die Phase U stromlos. In dieser Zeit kann die induzierte Spannung ΔU der Phase U gemessen werden, welche auch als elektromotorische Kraft (EMK) bezeichnet wird.

Die Nulllinie bei der Phasenspannung U_{Phase} ist die Sternpunktspannung. Dort, wo die Phasenspannung U_{Phase} die Sternpunktspannung kreuzt, liegt ein sogenannter Nulldurchgang der jeweiligen Phasenspannung U_{Phase} vor. Dieser Zeitpunkt des Nulldurchgangs der Phasenspannung U_{Phase} ist der Moment, wo der Stator und der Rotor zueinander ausgerichtet sind. Auf diese Nulldurchgänge wird gemessen. Somit kann in der Phase U bei einem einpoligen BLDC-Motor M zwei Mal ein Nulldurchgang während einer mechanischen Umdrehung (0° bis 360°) gemessen werden. Misst man in allen drei Phasen U, V, W den Strom, so kann während einer mechanischen Umdrehung sechs Mal die Rotorlage bestimmt werden. Auf diesem Prinzip bauen alle Steuerungseinheiten S von herkömmlichen BLDC-Motoren M auf.

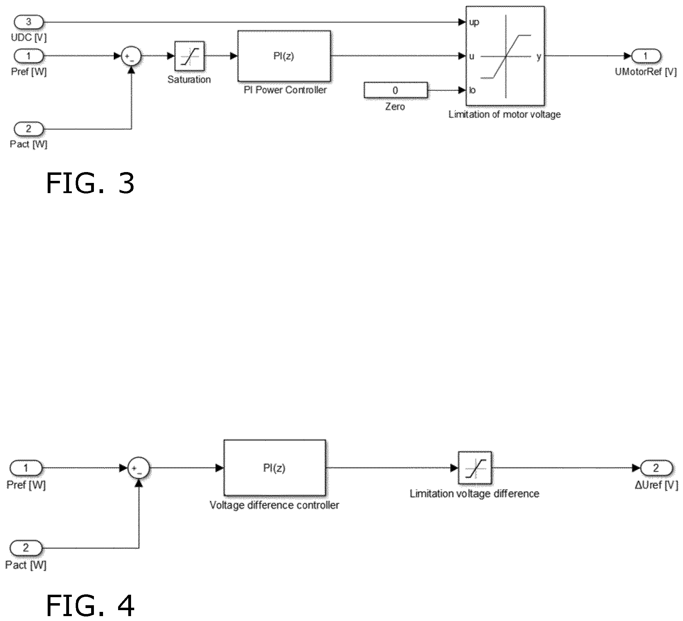

Bei einem derartigen bekannten zweiphasigen BLDC-Motor M wird die Soll-Leistung P_{ref} vorgegeben und mittels einer Leistungsregelung, wie in der Figur 3 dargestellt, die Ist-Leistung P_{act} geregelt. Hierbei wird jedoch die erreichbare Ist-Leistung P_{act} durch die Zwischenkreisspannung Uoc begrenzt. Wird der BLDC-Motor M somit bei Vollaussteuerung mit einer Phasenspannung U_{Phase} betrieben, welche der Zwischenkreisspannung U_{DC} entspricht, so kann eine noch höhere Soll-Leistung P_{ref} mittels der Leistungsregelung der Figur 3 nicht erreicht werden.

Somit erfolgt ein Bestimmen 100 einer Soll-Phasenspannung U_{MotorRef} basierend auf einer vorbestimmten Soll-Leistung P_{ref} und einer Ist-Leistung P_{act} (alternativ kann auch die Drehzahl oder der Strom des bürstenlosen Motors anstelle von dessen Leistung herangezogen werden). Ferner erfolgt ein Bestromen 200 der zwei Phasen U, V, W mit einer Phasenspannung U_{Phase} basierend auf der Soll-Phasenspannung U_{MotorRef} und einer erfassten Ist-Phasenspannung, wobei die Phasenspannung U_{Phase} des Bestromens 200 mittels PWM-Steuerung eingestellt wird. Dies ist bisher bekannt und kann mittels der Leistungsregelung der Figur 3 umgesetzt werden.

Erfindungsgemäß erfolgt ferner ein Vergleichen 300 der bestimmten Soll-Phasenspannung U_{MotorRef} mit einer erfassten Zwischenkreisspannung U_{DC}. In Reaktion auf das Vergleichen 300 erfolgt im Falle, dass die bestimmte Soll-Phasenspannung U_{MotorRef} der erfassten Zwischenkreisspannung U_{DC} entspricht, ein Ermitteln 400 einer induzierten Spannung ΔU einer nicht-bestromten Phase U, V, W. Das Ermitteln 400 der induzierten Spannung ΔU einer nicht-bestromten Phase U, V, W kann dadurch umgesetzt werden, dass ein Ermitteln 400a der Phasenspannung U_{Phase} der nicht-bestromten Phase U, V, W, dass ein Ermitteln 400b der Sternpunktspannung und dass ein Bilden 400c der Differenz zwischen der ermittelten Phasenspannung U_{Phase} und der ermittelten Sternpunktspannung als induzierte Spannung ΔU erfolgt.

Er erfolgt ferner ein Bestimmen 500 eines Sollwerts der induzierten Spannung ΔU_{ref} basierend auf der vorbestimmten Soll-Leistung P_{ref} und der Ist-Leistung P_{act}, ein Vergleichen 600 der ermittelten induzierten Spannung ΔU mit dem bestimmten Sollwert der induzierten Spannung ΔU_{ref} und ein Anpassen 700 der PWM-Frequenz, falls die Differenz zwischen der ermittelten induzierten Spannung ΔU und dem bestimmten Sollwert der induzierten Spannung ΔU_{ref} ungleich Null ist.

Mit anderen Worten erfolgt erfindungsgemäß in dem Fall, dass eine Vollaussteuerung vorliegt, ein Umschalten von der Leistungsregelung der Figur 3 auf die Leistungsregelung der Figur 4 und zurück, sobald die Vollaussteuerung nicht mehr vorliegt. Die Umschaltung der Regelung von dem Leistungsregler der Figur 3, welcher als Ausgangsgröße die Soll-Phasenspannung U_{MotorRef} als Sollspannung für den BLDC-Motor M ausgibt, und von dem Leistungsregler der Figur 4, welcher als Ausgangsgröße den Sollwert der induzierten Spannung ΔU_{Ref} als Sollspannungsdifferenz zwischen der Phasenspannung U_{Phase} und der Sternpunktspannung vorgibt, erfolgt dabei wie folgend beschrieben:
Im normalen Betrieb, wenn ausreichend Spannungsreserve für die Ausgabe der Soll-Phasenspannung U_{MotorRef} als Sollspannung für den BLDC-Motor M vorhanden ist, wird der BLDC-Motor M allein durch den Sollwert der Phasenspannung U_{MotorRef} geregelt bzw. über das Tastverhältnis von Phasenspannung U_{MotorRef} zu Zwischenkreisspannung U_{DC}.

Sinkt die Zwischenkreisspannung U_{DC} oder steigt die Vorgabe der Soll-Leistung P_{ref}, so wird der Tastgrad erhöht, bis der BLDC-Motor M ab einem gewissen Zeitpunkt in Vollaussteuerung betrieben wird. Die Soll-Phasenspannung U_{MotorRef} ist dann gleich der Zwischenkreisspannung U_{DC}.

Wird die Differenz zwischen Soll-Leistung P_{ref} und Ist-Leistung P_{act} des BLDC-Motors M größer als ein festgelegter Grenzwert, wird ein Zähler inkrementiert, bis ein weiterer Grenzwert überschritten wird. Bei Überschreiten des weiteren Grenzwerts wird nun die Leistungsregelung der Figur 4 zur Vorgabe des Sollwerts der induzierten Spannung ΔU_{ref} als Sollspannungsdifferenz zwischen der Phasenspannung U_{Phase} und der Sternpunktspannung aktiviert.

Wenn der Regler der Figur 4 zur Vorgabe der Sollspannungsdifferenz ΔU_{ref} zwischen der Phasenspannung U_{Phase} und der Sternpunktspannung aktiv ist, wird die maximale Phasenspannung U_{Phase} auf den BLDC-Motor M gegeben, welche der Zwischenkreisspannung U_{DC} entspricht. Die Eingangsgröße des Reglers der Figur 4 ist die Differenz zwischen Soll-Leistung P_{ref} und Ist-Leistung P_{act}. Die Reglerausgangsgröße ist begrenzt, um ein Kippen des BLDC-Motors M zu verhindern.

Der der Figur 4 zur Vorgabe der Sollspannungsdifferenz ΔU_{ref} zwischen der Phasenspannung U_{Phase} und der Sternpunktspannung hat dabei als Ausgangsgröße eine negative Referenz ΔU_{Ref,} wenn auf einen negativen Nulldurchgang synchronisiert wird, oder eine positive Referenz ΔU_{Ref} bei der Synchronisierung auf einen positiven Nulldurchgang.

Die Umschaltung zurück zur "normalen" Regelung der Figur 3 wird durchgeführt, wenn für eine definierte Zeit die Sollspannungsdifferenz ΔU_{ref} wieder Null ist, d.h. die Soll-Leistung P_{ref} ohne das Vorziehen des Kommutierungswinkels erreicht wird.

### Bezugszeichenliste (Bestandteil der Beschreibung)

- C1-C5: Kondensatoren
- D1-D6: Dioden der B6-Brücke
- T1-T6: Transistoren der B6-Brücke
- R1-R10: ohmsche Widerstände
- V_{DC}: Gleichspannung

- U: Phase
- V: Phase
- W: Phase

- M: (zweiphasiger) bürstenloser Motor; BLDC-Motor
- P_{ref}: Soll-Leistung
- P_{act}: Ist-Leistung
- S: Steuerungseinheit; Rechner; geregelter Frequenzumrichter
- U_{DC}, V_{DC}: Zwischenkreisspannung
- U_{Phase}: Phasenspannung
- U_{MotorRef}: Soll-Phasenspannung
- ΔU: induzierte Spannung; elektromotorische Kraft
- ΔU_{ref}: Sollwert der induzierten Spannung ΔU

- 100: Bestimmen einer Soll-Phasenspannung U_{MotorRef}
- 200: Bestromen der zwei Phasen U, V, W mit einer Phasenspannung U_{Phase}
- 300: Vergleichen der bestimmten Soll-Phasenspannung U_{MotorRef} mit einer erfassten Zwischenkreisspannung U_{DC}
- 400: Ermitteln einer induzierten Spannung ΔU einer nicht-bestromten Phase U, V, W
- 400a: Ermitteln der Phasenspannung U_{Phase} der nicht-bestromten Phase U, V, W
- 400b: Ermitteln der Sternpunktspannung
- 400c: Bilden der Differenz zwischen der ermittelten Phasenspannung U_{Phase} und der ermittelten Sternpunktspannung als induzierte Spannung ΔU
- 500: Bestimmen eines Sollwerts der induzierten Spannung ΔU_{ref}
- 600: Vergleichen der ermittelten induzierten Spannung ΔU mit dem bestimmten Sollwert der induzierten Spannung ΔU_{ref}
- 700: Anpassen der PWM-Frequenz

## Patentansprüche

1. Verfahren zum Ansteuern eines mindestens zweiphasigen bürstenlosen Motors (M), vorzugsweise ohne Rotorlagesensor, mit wenigstens den Schritten:
• Bestimmen (100) einer Soll-Phasenspannung (U_{MotorRef}) basierend auf einem von
o einer vorbestimmten Soll-Leistung und einer Ist-Leistung,
o einer vorbestimmten Soll-Drehzahl und einer Ist-Drehzahl,
o einem Soll-Strom und einem Ist-Strom sein,
• Bestromen (200) der zwei Phasen (U, V, W) mit einer Phasenspannung (Uₚₕₐₛₑ) basierend auf der Soll-Phasenspannung (U_{MotorRef}) und einer erfassten Ist-Phasenspannung, wobei die Phasenspannung (Uₚₕₐₛₑ) des Bestromens (200) mittels PWM-Steuerung eingestellt wird,
• Vergleichen (300) der bestimmten Soll-Phasenspannung (U_{MotorRef}) mit einer erfassten Zwischenkreisspannung (U_{DC}), **dadurch gekennzeichnet, dass**
• in Reaktion auf das Vergleichen (300) im Falle, dass die bestimmte Soll-Phasenspannung (U_{MotorRef}) der erfassten Zwischenkreisspannung (U_{DC}) abzüglich eines optionalen Offsets entspricht:
o Ermitteln (400) einer induzierten Spannung (ΔU) einer nicht-bestromten Phase (U, V, W),
o Bestimmen (500) eines Sollwerts der induzierten Spannung (ΔU_{ref}) basierend auf der vorbestimmten Soll-Leistung (P_{ref}) und der Ist-Leistung (P_{act}),
o Vergleichen (600) der ermittelten induzierten Spannung (ΔU) mit dem bestimmten Sollwert der induzierten Spannung (ΔU_{ref}) und
o Anpassen (700) der PWM-Frequenz, falls die Differenz zwischen der ermittelten induzierten Spannung (ΔU) und dem bestimmten Sollwert der induzierten Spannung (ΔU_{ref}) ungleich Null ist.

2. Verfahren nach Anspruch 1, **dadurch gekennzeichnet, dass**
die Reaktion auf das Vergleichen (300) der bestimmten Soll-Phasenspannung (U_{MotorRef}) mit einer erfassten Zwischenkreisspannung (U_{DC}) vorbestimmt zeitlich verzögert erfolgt.

3. Verfahren nach Anspruch 1 oder 2, **dadurch gekennzeichnet, dass**
das Bestromen (200) der zwei Phasen (U, V, W) mit der Phasenspannung (U_{Phase}) wieder basierend auf der Soll-Phasenspannung (U_{MotorRef}) und der erfassten Ist-Phasenspannung erfolgt, falls das Vergleichen (600) der ermittelten induzierten Spannung (ΔU) mit dem bestimmten Sollwert der induzierten Spannung (ΔU_{ref}) eine Differenz von Null ergibt.

4. Verfahren nach Anspruch 3, **dadurch gekennzeichnet, dass**
das erneute Bestromen () der zwei Phasen (U, V, W) mit der Phasenspannung (Uₚₕₐₛₑ) vorbestimmt zeitlich verzögert erfolgt.

5. Verfahren nach einem der vorangehenden Ansprüche, **dadurch gekennzeichnet, dass**
der vorbestimmte Sollwert der induzierten Spannung (ΔU_{ref}) kleiner als Null ist.

6. Verfahren nach einem der Ansprüche 1 bis 4, **dadurch gekennzeichnet, dass**
der vorbestimmte Sollwert der induzierten Spannung (ΔU_{ref}) größer als Null ist.

7. Verfahren nach einem der vorangehenden Ansprüche, **dadurch gekennzeichnet, dass** das Ermitteln (400) der induzierten Spannung (ΔU) einer nicht-bestromten Phase (U, V, W) durch die Schritte erfolgt:
• Ermitteln (400a) der Phasenspannung (Uₚₕₐₛₑ) der nicht-bestromten Phase (U, V, W),
• Ermitteln (400b) der Sternpunktspannung und
• Bilden (400c) der Differenz zwischen der ermittelten Phasenspannung (Uₚₕₐₛₑ) und der ermittelten Sternpunktspannung als induzierte Spannung (ΔU).

8. Ansteuerungsvorrichtung zum Ansteuern eines mindestens zweiphasigen bürstenlosen Motors (M), vorzugsweise ohne Rotorlagesensor, vorzugsweise gemäß einem Verfahren nach einem der vorangehenden Ansprüche,
mit einer Steuerungseinheit (S), welche ausgebildet ist,
• eine Soll-Phasenspannung (U_{MotorRef}) bestimmen basierend auf einem von
o einer vorbestimmten Soll-Leistung und einer Ist-Leistung,
o einer vorbestimmten Soll-Drehzahl und einer Ist-Drehzahl,
o einem Soll-Strom und einem Ist-Strom sein,
• zwei Phasen (U, V, W) mit einer Phasenspannung (U_{Phase}) basierend auf der Soll-Phasenspannung (U_{MotorRef}) und einer erfassten Ist-Phasenspannung zu bestromen, wobei die Phasenspannung (U_{Phase}) des Bestromens mittels PWM-Steuerung eingestellt wird, und
• die bestimmte Soll-Phasenspannung (U_{MotorRef}) mit einer erfassten Zwischenkreisspannung (U_{DC}) zu vergleichen, und
mit einer Abtasteinrichtung, welche ausgebildet ist, die induzierte Spannung (ΔU) einer nicht-bestromten Phase (U, V, W) zu ermitteln,
**dadurch gekennzeichnet, dass**
die Steuerungseinheit (S) ferner ausgebildet ist, in Reaktion auf das Vergleichen im Falle, dass die bestimmte Soll-Phasenspannung (U_{MotorRef}) der erfassten Zwischenkreisspannung (U_{DC}) abzüglich eines optionalen Offsets entspricht:
• einen Sollwert der induzierten Spannung (ΔU_{ref}) basierend auf der vorbestimmten Soll-Leistung (P_{ref}) und der Ist-Leistung (P_{act}) zu bestimmen,
• die ermittelte induzierte Spannung (ΔU) mit dem bestimmten Sollwert der induzierten Spannung (ΔU_{ref}) zu vergleichen und
• die PWM-Frequenz anzupassen, falls die Differenz zwischen der ermittelten induzierten Spannung (ΔU) und dem bestimmten Sollwert der induzierten Spannung (ΔU_{ref}) ungleich Null ist.

9. Ansteuerungsvorrichtung nach Anspruch 8, **dadurch gekennzeichnet, dass**
die Abtasteinrichtung ferner ausgebildet ist,
die Phasenspannung (Uₚₕₐₛₑ) der nicht-bestromten Phase (U, V, W) zu ermitteln, eine Sternpunktspannung zu ermitteln und
die Differenz zwischen der ermittelten Phasenspannung (Uₚₕₐₛₑ) und der ermittelten Sternpunktspannung als induzierte Spannung (ΔU) zu bilden.

10. Mindestens zweiphasiger bürstenloser Motor (M), vorzugsweise ohne Rotorlagesensor, mit einer Ansteuerungsvorrichtung nach Anspruch 8 oder 9.

11. Haushaltsgerät mit mindestens einem mindestens zweiphasigen bürstenlosen Motor (M) nach Anspruch 10.

12. Haushaltsgerät nach Anspruch 11, **dadurch gekennzeichnet, dass**
das Haushaltsgerät einen, vorzugsweise wiederaufladbaren, elektrischen Energiespeicher aufweist und ausgebildet ist, mittels der gespeicherten elektrischen Energie des elektrischen Energiespeichers betrieben zu werden.

## Claims

1. Method for controlling an at least two-phase brushless motor (M), preferably without a rotor position sensor, comprising at least the steps of:
• determining (100) a target phase voltage (U_{MotorRef}) based on one of
∘ a predetermined target power and an actual power,
∘ a predetermined target speed and an actual speed,
∘ a target current and an actual current,
• energising (200) the two phases (U, V, 1N) with a phase voltage (U_{Phase}) based on the target phase voltage (U_{MotorRef}) and a detected actual phase voltage, the phase voltage (U_{Phase}) of the energisation (200) being adjusted by means of PWM control,
• comparing (300) the determined target phase voltage (U_{MotorRef}) with a detected intermediate circuit voltage (U_{DC}), **characterized in that**
• in response to the comparison (300), in the case that the determined target phase voltage (U_{MotorRef}) corresponds to the detected intermediate circuit voltage (U_{Dc}) minus an optional offset:
o identifying (400) an induced voltage {ΔU} of a non-energised phase (U, V, W),
o determining (500) a target value of the induced voltage (ΔU_{ref}) based on the predetermined target power (P_{ref}) and the actual power (P_{act}),
o comparing (600) the identified induced voltage (ΔU) with the determined target value of the induced voltage (ΔU_{ref}) and
o adjusting (700) the PWM frequency if the difference between the identified induced voltage (ΔU) and the determined target value of the induced voltage (ΔU_{ref}) is not equal to zero.

2. Method according to claim 1, **characterised in that**
the response to the comparison (300) of the determined target phase voltage (U_{MotorRef}) with a detected intermediate circuit voltage (U_{Dc}) is carried out in a predetermined, temporally delayed manner.

3. Method according to either claim 1 or claim 2, **characterised in that**
the energisation (200) of the two phases (U, V, W) with the phase voltage (Uₚₕₐₛₑ) is carried out again based on the target phase voltage (U_{MotorRef}) and the detected actual phase voltage if the comparison (600) of the identified induced voltage (ΔU) with the determined target value of the induced voltage (ΔU_{ref}) results in a difference of zero.

4. Method according to claim 3, **characterised in that**
the re-energisation () of the two phases (U, V, W) with the phase voltage (Uₚₕₐₛₑ) is carried out in a predetermined, temporally delayed manner.

5. Method according to any of the preceding claims, **characterised in that**
the predetermined target value of the induced voltage (ΔU_{ref}) is less than zero.

6. Method according to any of claims 1 to 4, **characterised in that**
the predetermined target value of the induced voltage (ΔU_{ref}) is greater than zero.

7. Method according to any of the preceding claims, **characterised in that** the identification (400) of the induced voltage (ΔU) of a non-energised phase (U, V, W) is carried out by the steps of:
• identifying (400a) the phase voltage (Uₚₕₐₛₑ) of the non-energised phase (U, V, W),
• identifying (400b) the neutral point voltage; and
• calculating (400c) the difference between the identified phase voltage (U_{Phase}) and the identified neutral point voltage as the induced voltage (ΔU).

8. Control device for controlling an at least two-phase brushless motor (M), preferably without a rotor position sensor, preferably in accordance with a method according to any of the preceding claims,
comprising a control unit (S), which is designed
• determine a target phase voltage (U_{MotorRef}) based on one of
∘ a predetermined target power and an actual power,
∘ a predetermined target speed and an actual speed,
∘ a target current and an actual current,
• to energise two phases (U, V, W) with a phase voltage (U_{Phase}) based on the target phase voltage (U_{MotorRef}) and a detected actual phase voltage, the phase voltage (U_{Phase}) of the energisation being adjusted by means of PWM control, and
• to compare the determined target phase voltage (U_{MotorRef}) with a detected intermediate circuit voltage (U_{DC}), and
comprising a scanning apparatus which is designed to identify the induced voltage (ΔU) of a non-energised phase (U, V, W),
**characterized in that** the control unit (S) is further designed, in response to the comparison in the case that the determined target phase voltage (U_{MotorRef}) corresponds to the detected intermediate circuit voltage (U_{Dc}) minus an optional offset:
• to determine a target value of the induced voltage (ΔU_{ref}) based on the predetermined target power (P_{ref}) and the actual power (P_{act}),
• to compare the identified induced voltage (ΔU) with the determined target value of the induced voltage (ΔU_{ref}), and
• to adjust the PWM frequency if the difference between the identified induced voltage (ΔU) and the determined target value of the induced voltage (ΔU_{ref}) is not equal to zero.

9. Control device according to claim 8, **characterised in that**
the scanning apparatus is further designed
to identify the phase voltage (U_{Phase}) of the non-energised phase (U, V, W),
to identify a neutral point voltage; and
to calculate the difference between the identified phase voltage (U_{Phase}) and the identified neutral point voltage as the induced voltage (ΔU).

10. Brushless motor (M), which is at least two-phase, preferably without a rotor position sensor, comprising a control device according to either claim 8 or claim 9.

11. Domestic appliance comprising at least one at least two-phase brushless motor (M) according to claim 10.

12. Domestic appliance according to claim 11, **characterised in that**
the domestic appliance has a, preferably rechargeable, electrical energy store and is designed to be operated by means of the stored electrical energy of the electrical energy store.

## Revendications

1. Procédé pour la commande d'un moteur (M) sans balais à au moins deux phases, de préférence sans capteur de position de rotor, comportant au moins les étapes :
• de détermination (100) d'une tension de phase de consigne (U_{MotorRef}) sur la base d'un élément parmi
o une puissance de consigne prédéterminée et une puissance réelle,
o une vitesse de rotation de consigne prédéterminée et une vitesse de rotation réelle,
o un courant de consigne et un courant réel être,
• d'alimentation en courant (200) des deux phases (U, V, W) avec une tension de phase (U_{Phase}) basée sur la tension de phase de consigne (U_{MotorRef}) et une tension de phase réelle détectée, la tension de phase (U_{Phase}) de l'alimentation en courant (200) étant réglée au moyen d'une commande PWM,
• de comparaison (300) de la tension de phase de consigne (U_{MotorRef}) déterminée avec une tension de circuit intermédiaire (U_{DC}) détectée,
**caractérisé en ce que**
• en réponse à la comparaison (300), dans le cas où la tension de phase de consigne (U_{MotorRef}) déterminée correspond à la tension de circuit intermédiaire (U_{DC}) détectée moins un décalage optionnel :
o définition (400) d'une tension induite (ΔU) d'une phase (U, V, W) non alimentée en courant,
o détermination (500) d'une valeur de consigne de la tension induite (ΔU_{ref}) sur la base de la puissance de consigne (P_{ref}) prédéterminée et de la puissance réelle (P_{act}),
o comparaison (600) de la tension induite (ΔU) définie avec la valeur de consigne déterminée de la tension induite (ΔU_{ref}) et
o adaptation (700) de la fréquence PWM si la différence entre la tension induite (ΔU) définie et la valeur de consigne déterminée de la tension induite (ΔU_{ref}) n'est pas égale à zéro.

2. Procédé selon la revendication 1, **caractérisé en ce que**
la réponse à la comparaison (300) de la tension de phase de consigne (U_{MotorRef}) déterminée avec une tension de circuit intermédiaire (U_{Dc}) détectée est effectuée avec un retard temporel prédéterminé.

3. Procédé selon la revendication 1 ou 2, **caractérisé en ce que**
l'alimentation en courant (200) des deux phases (U, V, W) avec la tension de phase (U_{Phase}) est effectuée de nouveau sur la base de la tension de phase de consigne (U_{MotorRef}) et de la tension de phase réelle détectée si la comparaison (600) de la tension induite (ΔU) définie avec la valeur de consigne déterminée de la tension induite (ΔU_{ref}) donne une différence égale à zéro.

4. Procédé selon la revendication 3, **caractérisé en ce que**
l'alimentation en courant () de nouveau des deux phases (U, V, W) avec la tension de phase (U_{Phase}) est effectuée avec un retard temporel prédéterminé.

5. Procédé selon l'une des revendications précédentes,
**caractérisé en ce que**
la valeur de consigne prédéterminée de la tension induite (ΔU_{ref}) est inférieure à zéro.

6. Procédé selon l'une des revendications 1 à 4, **caractérisé en ce que**
la valeur de consigne prédéterminée de la tension induite (ΔU_{ref}) est supérieure à zéro.

7. Procédé selon l'une des revendications précédentes,
**caractérisé en ce que** la définition (400) de la tension induite (ΔU) d'une phase (U, V, W) non alimentée en courant est effectuée à travers les étapes :
• de définition (400a) de la tension de phase (U_{Phase}) de la phase (U, V, W) non alimentée en courant,
• de définition (400b) de la tension de point neutre et
• de formation (400c) de la différence entre la tension de phase (U_{Phase}) définie et la tension de point neutre définie comme tension induite (ΔU).

8. Dispositif de commande pour la commande d'un moteur (M) sans balais à au moins deux phases, de préférence sans capteur de position de rotor, de préférence conformément à un procédé selon l'une des revendications précédentes,
comportant une unité de commande (S), laquelle est configurée pour
• déterminer une tension de phase de consigne (U_{MotorRef}) sur la base d'un élément parmi
∘ une puissance de consigne prédéterminée et une puissance réelle,
∘ une vitesse de rotation de consigne prédéterminée et une vitesse de rotation réelle,
∘ un courant de consigne et un courant réel être,
• alimenter en courant deux phases (U, V, W) avec une tension de phase (U_{Phase}) sur la base de la tension de phase de consigne (U_{MotorRef}) et d'une tension de phase réelle détectée, la tension de phase (U_{Phase}) de l'alimentation en courant étant réglée au moyen d'une commande PWM, et
• comparer la tension de phase de consigne (U_{MotorRef}) déterminée avec une tension de circuit intermédiaire (U_{Dc}) détectée, et
comportant un appareil de balayage, lequel est configuré pour définir la tension induite (ΔU) d'une phase (U, V, W) non alimentée en courant,
**caractérisé en ce que** l'unité de commande (S) est en outre configurée pour, en réponse à la comparaison dans le cas où la tension de phase de consigne (U_{MotorRef}) déterminée correspond à la tension de circuit intermédiaire (U_{DC}) détectée moins un décalage optionnel :
• déterminer une valeur de consigne de la tension induite (ΔU_{ref}) sur la base de la puissance de consigne (P_{ref}) prédéterminée et de la puissance réelle (P_{act}),
• comparer la tension induite (ΔU) définie avec la valeur de consigne déterminée de la tension induite (ΔU_{ref}) et
• adapter la fréquence PWM si la différence entre la tension induite (ΔU) définie et la valeur de consigne déterminée de la tension induite (ΔU_{ref}) n'est pas égale à zéro.

9. Dispositif de commande selon la revendication 8, **caractérisé en ce que**
l'appareil de balayage est en outre configuré pour
définir la tension de phase (U_{Phase}) de la phase (U, V, W) non alimentée en courant,
définir la tension de point neutre et
former la différence entre la tension de phase (U_{Phase}) définie et la tension de point neutre définie comme tension induite (ΔU).

10. Moteur (M) sans balais à au moins deux phases, de préférence sans capteur de position de rotor, comportant un dispositif de commande selon la revendication 8 ou 9.

11. Appareil électroménager comportant au moins un moteur (M) sans balais à au moins deux phases selon la revendication 10.

12. Appareil électroménager selon la revendication 11, **caractérisé en ce que**
l'appareil électroménager présente un accumulateur d'énergie électrique, de préférence rechargeable, et est configuré pour fonctionner au moyen de l'énergie électrique accumulée de l'accumulateur d'énergie électrique.
